# EUROPEAN PATENT APPLICATION

(11) **EP 4 616 952 A1**
(43) Date of publication of application: **17.09.2025**
(21) Application number: 24382275.6
(22) Date of filing: 14.03.2024
(51) Int. Cl.: B03C 1/01, B03C 1/28, B03C 1/30, C02F 1/48

(54) **MAGNETIC SEPARATION MODULE AND SYSTEM FOR THE DETERMINATION OF PARAMETERS FOR THE QUANTIFICATION OF MICROPLASTICS IN AN AQUEOUS MATRIX**

(71) Applicant: CAPTOPLASTIC, S.L., 28050 Madrid (ES); Universidad Autónoma de Madrid, 28049 Madrid (ES)
(72) Inventor: PARRA SÁNCHEZ, Raquel, E-28050 Madrid (ES); CARBONERAS CONTRERAS, María Belén, E-28050 Madrid (ES); CASAS DE PEDRO, José Antonio, E-28049 Madrid (ES); MARTÍNEZ DE PEDRO, Zahara, E-28049 Madrid (ES); MUÑOZ GARCÍA, Macarena, E-28049 Madrid (ES)
(74) Representative: ABG Intellectual Property Law, S.L.

(57) **Abstract**

The present invention relates to a magnetic separation module which automatically allows the magnetic separation of microplastics from an aqueous matrix after the interaction thereof with magnetic material particles, preferably magnetic iron material particles, wherein the aqueous matrix comprises, in addition to the microplastics, non-plastic organic particles and, optionally, inorganic particles.

The invention also relates to a system comprising, among other elements, the magnetic separation module, and wherein the system allows the semiautomatic or automatic determination of different parameters for the quantification of microplastics contained in the aqueous matrix.

## Description

### FIELD OF THE INVENTION

The present invention relates to the field of the technology of detection and quantification of microplastics in aqueous matrices, wherein the aqueous matrices comprise, in addition to microplastics, non-plastic organic particles and, optionally, inorganic particles. More particularly, the invention relates to a magnetic separation module which automatically allows the magnetic separation of microplastics from the aqueous matrix after the interaction thereof with magnetic material particles, preferably magnetic iron material particles.

The present invention also relates to a system comprising, among other elements, the magnetic separation module, and wherein the system allows the semiautomatic or automatic determination of different parameters for the quantification of microplastics contained in the aqueous matrix. The system of the invention comprises elements for the magnetic separation of microplastics from the aqueous matrix after the interaction thereof with magnetic material particles, preferably magnetic iron material particles, and elements for a subsequent selective oxidation of the non-plastic organic particles that may have been separated along with microplastics in the first step.

### BACKGROUND OF THE INVENTION

The excellent properties of plastics, including ease of molding, high mechanical strength and chemical resistance and low cost, have led to their widespread use by both industry and society as a whole. Since the development of the first synthetic polymers in the mid-20th century, their production has not stopped growing. In 2019, global plastics production reached 370 million tons (PlasticsEurope, 2020), and manufacturing is expected to double in the next twenty years. Although the usefulness of plastic is indisputable, the generation of plastic waste, and its inadequate management, represents a major environmental problem.

The removal of plastic, when it is large in size, is not problematic; however, plastic breaks down with use, generating small plastic fractions that are more difficult to remove, especially when they are millimeters in diameter. Microplastics, defined as plastic particles smaller than 5 mm in size (Bergmann, M. et al., Marine Anthropogenic Litter (2015) Springer) are the plastic debris the presence of which is most widespread in the environment. Microplastics have been found in virtually all ecosystems on Earth, including inland and marine waters, sediments, air, and soils. Consequently, they are also present in organisms, mainly aquatic organisms, and there is significant concern about the potential harm that their presence may cause to both humans and wildlife.

It is estimated that 80% of the microplastics present in the ocean come directly from rivers. Rivers, in turn, are the main recipients of effluents from urban and industrial wastewater treatment plants (WWTPs), which have been identified as important sources of introducing microplastics into the aquatic environment. In order to prevent environmental pollution or damage to health, technology which allows treating water contaminated with microplastics and separating microplastics from water is therefore necessary.

There are currently different methods and equipment to capture microplastics in water samples, such as coagulation and sedimentation, electrocoagulation, the use of superhydrophobic materials, the use of micromachines, adsorption, or magnetization. Microplastics can be captured by these methods and equipment by adding different substances that allow these separations, so that the microparticles remain attached to said substances which can subsequently be easily removed.

On the other hand, in order to evaluate the true impact of microplastics and their distribution in the environment, as well as to develop specific regulations in this field, it is essential to carry out an adequate quantification and characterization of these microplastic particles in the different aqueous matrices that may contain them (WWTP effluents, drinking water, rivers, lakes, reservoirs and oceans, among others). The analysis of these microplastic particles is especially complex given their high heterogeneity in size, shape, color, density, and chemical composition. The greatest challenge is found in the smallest microplastics, i.e., those having a size smaller than 300 µm. There is a clear need to develop effective equipment for the analysis of microplastics regardless of their size, shape, color, density, and chemical composition. Furthermore, in an aqueous matrix to be treated, in addition to microplastics, there are non-plastic organic particles and, optionally, inorganic particles.

The analysis of microplastics present in the aqueous matrices to be evaluated necessarily requires several steps. Firstly, the microplastics have to be extracted from the aqueous matrix. Secondly, the solid particles separated in the first step have to be processed in order to eliminate possible interferences, mainly non-plastic organic particles. Thirdly, and only if the sample has a high non-plastic solids content, a step of separating microplastics may be necessary. Finally, the microplastics are quantified and characterized.

Filtration or sieving is by far the most common method for the separation of microplastics from aqueous matrices. The pore size of the filter or sieve used is highly variable and will logically determine the size of the microplastics that can be separated. However, very small pore sizes are usually avoided as they cause clogging problems due to the presence of other suspended solids in the water and, furthermore, the use thereof consumes a lot of time. Therefore, small pore sizes (0.45 - 100 µm) are often used in the analysis of particularly clean aqueous matrices, such as groundwater and drinking water. In that sense, Neston nets with a pore size of 333 µm as well as plankton nets with a pore size of 100 µm are most commonly used directly in sampling.

The magnetic separation of microplastics from aqueous matrices by the interaction thereof with magnetic materials is a novel treatment that allows the separation of microplastics from water regardless of their size and nature, which represents a significant advantage over conventional filtration methods and equipment. However, its use would be accompanied by an increase in the density of the microplastics, which would hinder their subsequent separation by density from the rest of the solids present in the water and which would also have interacted with the added magnetic material, such as non-plastic organic particles, for example. It is possibly for this reason that the magnetic separation of microplastics from water for the quantification thereof has not been explored to date.

Moreover, there is the difficulty that, in environmental samples, aqueous matrices often contain suspended, primarily organic solid particles. These particles can interfere with and hinder the analysis (i.e., identification and quantification) of microplastics, leading to an overestimation of their concentration, whatever the extraction method used. It is therefore essential to significantly reduce the interference of solid non-plastic organic particles by means of their removal in order to obtain good results. The most common methods and equipment for the removal of suspended solid non-plastic particles are acid, alkaline or enzymatic digestion or the application of oxidation processes. Of these, the use of oxidation processes represents a promising alternative for the removal of organic particles. Particularly noteworthy is the Fenton reaction oxidation process, which is based on the catalytic decomposition of H₂O₂ in the presence of iron salts in an acid medium. This results in the generation of hydroxyl (HO) radicals, species of high oxidizing power and low selectivity capable of removing a wide variety of organic compounds. The feasibility and effectiveness of this Fenton reaction oxidation process has been demonstrated to remove suspended solid non-plastic organic particles and to facilitate the isolation of microplastics present in aqueous matrices of a different nature, especially for analyzing larger sample volumes or more complex matrices, such as for the treatment of wastewater with a high content of organic compounds.

At present, commercial equipment is used for the semiautomatic or automatic identification and quantification of the abovementioned microplastics contained in the aqueous matrix. However, said equipment has different limitations, especially because they require sample pretreatment, or because they are very expensive and/or very slow, so that each analysis of a sample has a high cost, and/or where the analysis times are long, which makes the process carried out in said equipment more expensive.

There is therefore a need in the art for a magnetic separation module that automatically and effectively allows the magnetic separation of microplastics from the aqueous matrix comprising, in addition to the microplastics, non-plastic organic particles and, optionally, inorganic particles, after the interaction thereof with added particles of a magnetic material, regardless of the composition and size of the microplastics. There is also a need for a system that allows, semiautomatically or automatically and effectively, the determination of parameters for the quantification of microplastics in an aqueous matrix comprising, in addition to the microplastics, non-plastic organic particles and, optionally, inorganic particles, regardless of the composition and size of the microplastics; and wherein both the magnetic separation module and the system for the determination of parameters for the quantification of microplastics are economically cost-effective and applicable to different types of aqueous matrices.

### DESCRIPTION OF THE INVENTION

The present invention provides a magnetic separation module for separating microplastics from an aqueous matrix to be treated comprising microplastics and non-plastic organic particles and, optionally, inorganic particles according to claim 1, and furthermore provides a system for the determination of parameters for the quantification of microplastics in an aqueous matrix comprising microplastics and non-plastic organic particles according to claim 9. The embodiments of the different aspects of the invention are defined in the dependent claims.

In a first inventive aspect, the present invention provides a magnetic separation module for separating microplastics from an aqueous matrix to be treated, wherein the aqueous matrix to be treated comprises microplastics, non-plastic organic particles and, optionally, inorganic particles, wherein the magnetic separation module is adapted for using a mixture consisting of a specific volume of the aqueous matrix to be treated and of a specific amount of magnetic material particles, said magnetic separation module comprising:
- a tank which, in the operating mode, comprises the mixture, wherein the tank comprises a body with a mouth at one end, with said mouth being adapted for the entry of a specific volume of the aqueous matrix to be treated premixed with the magnetic material particles, or of the two parts of the mixture separately, and wherein the body ends in a collection portion arranged in a part opposite the mouth, wherein the collection portion comprises a closed end, wherein the collection portion is adapted, in the operating mode, for collecting in this collection portion:
   - the residual aqueous fraction of the mixture together with the magnetic material particles that have not been retained by magnetic separation means, and
   - the formed aggregates and the free magnetic material particles of the mixture that have been retained by magnetic separation means; and
- magnetic separation means, comprising:
   - at least one magnetic field generating element,
   - automatic actuation means for actuating the at least one magnetic field generating element, which can be controlled by a control unit so that:
      i. in the work mode, the at least one magnetic field generating element generates a magnetic field inside the tank to retain the formed aggregates and the free magnetic material particles of the mixture inside the tank; and
      ii. in the standby mode, the at least one magnetic field generating element does not generate a magnetic field or does not generate a magnetic field that is sufficient to retain the formed aggregates and the free magnetic material particles of the mixture.

Upon contacting the aqueous matrix to be treated with the added magnetic material particles, aggregates are formed. The aggregates are microplastic/magnetic material particle aggregates and non-plastic organic particle/magnetic material particle aggregates. In that sense, in the operating mode, the mixture inside the tank comprises microplastic/magnetic material particle aggregates and non-plastic organic particle/magnetic material particle aggregates, and further comprises free magnetic material particles and inorganic particle-free particles. Both the aggregates and the free magnetic material particles are magnetizable.

In the context of the present invention, the expression "aqueous matrix" refers to a composition containing water, preferably containing at least 80% by weight of water with respect to the total weight of the composition, more preferably at least 85%, even more preferably at least 90%, even more preferably at least 95%. The aqueous matrix may further contain other substances that are already dissolved (for example, salts such as NaCl) or suspended. Particularly, the aqueous matrix can be wastewater (including domestic, urban, industrial, agricultural and livestock wastewater), sea water, river water, lake water, underground water, tap water or a mixture thereof. To that end, wastewater treatment plants, water purification stations, the agri-food industry (for example, fish farms), water sources for human consumption, water installations for recreational purposes (for example swimming pools), among others, are installations of interest for applying the magnetic separation module and system described in the present invention. The aqueous matrices comprise microplastics and further comprise non-plastic organic particles. Optionally, the aqueous matrices may further comprise inorganic particles.

In the context of the present invention, the term "microplastic" or "microplastics" refers to a plastic material having an average diameter of less than 5 mm, preferably with an average diameter comprised in the range of 0.1 µm to 5 mm, more preferably in the range of 0.1 µm to 1 mm, even more preferably in the range of 0.1 µm to 500 µm, even more preferably 100 µm to 250 µm. The average diameter is defined as the average length of the microplastic particles. The microplastics can be formed by any plastic material, preferably synthetic organic polymers, such as polyethylene terephthalates (PET), polyethylenes (PE) including high-density polyethylene (HDPE) and low-density polyethylene (LDPE), polyvinyl chloride (PVC), polypropylenes (PP), polystyrenes (PS), polycarbonates (PC), polyurethanes (PU) and combinations thereof.

In the context of the present invention, the term "magnetic material particles" refers to any solid substance of natural or synthetic origin, preferably comprising at least one iron species and with magnetic properties, i.e., it is attracted by a magnet. In a particular embodiment, the magnetic iron material is inorganic. In a particular embodiment, the magnetic iron material is not coated, i.e., they are bare magnetic material particles. Preferably, the magnetic iron material has a magnetic saturation of between 5 and 100 emu/g (between 5·10³ and 10⁵ A/m), more preferably between 30 and 90 emu/g (between 30·10³ and 90·10³ A/m), even more preferably between 65 and 90 emu/g (between 65·10³ and 90·10³ A/m), most preferably between 70 and 90 emu/g (between 70·10³ and 90·10³ A/m). The magnetization (M) of the magnetic iron material is measured based on the external magnetic field (H) applied in the interval of -10000 to 10000 Oe (which is equivalent to -797700 to 797700 A/m) at room temperature. The magnetic saturation value of the material is that value of M reached when any subsequent increase in H does not cause an increase in the magnetization of the material. Preferably, the iron material has an iron content of at least 10% by weight with respect to the total weight of the material, preferably at least 20% by weight, more preferably at least 25% by weight, even more preferably at least 30% by weight, even more preferably at least 35% by weight, even more preferably at least 40% by weight, even more preferably at least 45% by weight, even more preferably at least 50% by weight, even more preferably at least 55% by weight, even more preferably at least 60% by weight, even more preferably at least 65% by weight. Preferably, the magnetic iron material comprises an iron species selected from the group consisting of metallic Fe(II), Fe(III), Fe and a mixture thereof. One example would be the magnetic iron ores, such as magnetite (formed by ferrous-diferric oxide FeO·Fe₂O₃, sometimes formulated as Fe₃O₄), maghemite (γ-Fe₂O₃), ilmenite (FeTiO₃) and pyrrhotite (Fe_{0.8-1}S), among others. In a preferred embodiment, the magnetic iron material is the ore, magnetite. The use of magnetic iron ores, particularly magnetite, is advantageous from the economic and environmental viewpoint since they are abundant and environmentally-friendly materials that can be readily separated from aqueous matrices. The magnetic iron material is in the form of particles. The term "particle" refers to the fact that the magnetic iron material is in the form of powder or granules with an average diameter of less than 5 mm, preferably the average diameter of which is comprised between 0.05 µm and 5 mm, more preferably between 0.05 µm and 1 mm, even more preferably between 0.05 µm and 500 µm, even more preferably between 0.05 µm and 100 µm, even more preferably between 0.1 µm and 10 µm, even more preferably between 0.1 µm and 5 µm, even more preferably between 0.1 µm and 1 µm, even more preferably between 0.1 µm and 0,5 µm, most preferably between 0.1 µm and 0.3 µm.

Preferably, the concentration of suspended solid particles of the aqueous matrix to be treated by the magnetic separation module of the invention is between 0.1 and 10000 mg/L, more preferably between 1 and 2000 mg/L, even more preferably between 10 and 100 mg/L.

Preferably, before the step of operating the magnetic separation module of the invention, for each aqueous matrix to be treated, the suspended solid particles present in the aqueous matrix to be treated are determined, as their amount and composition help to determine the amount of magnetic material particles, preferably iron particles, and more preferably magnetite particles, to be added to the tank of the magnetic separation module.

To determine the amount of magnetic material to be added, an aliquot of the aqueous matrix can be taken and the amount of suspended solid particles of the aqueous matrix determined. This involves applying standard methods for the determination of total suspended solid particles known to the person skilled in the art, such as for example gravimetric methods based on retaining the solid particles in a glass fiber filter ("Standard methods for the examination of water and wastewater", "2540 Solids" (APHA, AWWA, WPCF, 1992); UNE-EN 872:2006 standard, Water quality. Determination of suspended solids. Method by filtration through glass fiber filters).

In one embodiment, the amount of magnetic material particles, for example, magnetic iron material particles (in a final concentration measured in the aqueous matrix itself), preferably magnetite, added to the aqueous matrix is in the range of 1 mg/L to 4000 g/L, more preferably 10 mg/L to 1000 g/L, even more preferably 10 mg/L to 100 g/L, even more preferably 10 mg/L to 10 g/L, most preferably 100 mg/L to 1 g/L.

The expression "non-plastic organic particles" or "non-plastic solid organic particles" refers to particles that may exhibit any shape and the average diameter of which is in the range of 0.1 µm to 1 cm, preferably 0.1 µm to 5 mm, preferably 0.1 µm to 1 mm, more preferably 0.1 µm to 500 µm, even more preferably 0.1 µm to 100 µm, even more preferably 20 µm to 50 µm, and which are not made up of a plastic material, the average diameter being the average length (summation of lengths of the analyzed particles divided by the number of analyzed particles) and the length being the largest dimension of each particle. Examples of plastics are the same as those described for the microplastics. Examples of non-plastic (organic) material particles are of a plant origin (leaves, branches, seeds, fruits, etc.), an animal origin (bones, microcrustaceans, larvae, animal remains, etc.), a fungal origin, etc. The size of the particles can be determined the same way as described for the microplastics.

The expression "inorganic particles" refers to particles that may exhibit any shape and the average diameter of which is in the range of 0.1 µm to 1 cm, preferably 0.1 µm to 5 mm, preferably 0.1 µm to 1 mm, more preferably 0.1 µm to 500 µm, even more preferably 100 µm to 500 µm, even more preferably 100 µm to 250 µm, and of a mineral origin, the average diameter being the average length (summation of lengths of the analyzed particles divided by the number of analyzed particles) and the length being the largest dimension of each particle. Examples of inorganic particles are sands, clays, insoluble salts, metallic oxides, etc. The size of the particles can be determined the same way as described for the microplastics.

In one embodiment, the size of the non-plastic organic particles and of the inorganic particles is in the same range as the size of the microplastics.

The term "aggregates" refers to the "microplastic/magnetic material particle, preferably magnetic iron material particle, aggregates" and also to "organic particle/magnetic material particle, preferably magnetic iron material particle, aggregates". The "microplastic/magnetic material particle, preferably magnetic iron material particle, aggregates" refer to a cluster of particles formed by the microplastics and the magnetic material particles, preferably magnetic iron material particles, preferably due to the interaction occurring between both. Similarly, the term "organic particle/magnetic material particle, preferably magnetic iron material particle, aggregates" refers to a cluster of particles formed by the organic (non-microplastic) particles and the magnetic material particles, preferably magnetic iron material particles, due to the interaction occurring between both. Similarly, the term "aggregates" also refers to the "non-plastic organic particle/magnetic material particle, preferably magnetic iron material particle, aggregates", which refers to a cluster of particles formed by the non-plastic organic particles and the magnetic material particles, preferably magnetic iron material particles, due to the interaction occurring between both.

The magnetic separation module of the invention is suitable for being part of a system for the determination of parameters for the quantification of microplastics in an aqueous matrix comprising microplastics, non-plastic organic particles and, optionally, inorganic particles.

One of the advantages of the magnetic separation module of the present invention is its universal character, as it automatically allows an effective magnetic separation of any microplastic regardless of the composition of the aqueous matrix to be treated and of the chemical nature, size, shape, color and density of the microplastic comprised in the aqueous matrix to be treated. As the magnetic separation module allows for an automatic process, possible human errors that may occur during the operation of the magnetic separation module are eliminated.

Another advantage of the magnetic separation module of the present invention is that it is simple and inexpensive to manufacture and assemble.

Yet another advantage of the magnetic separation module of the present invention is that it allows a relatively rapid process for magnetic separation, wherein said process for magnetic separation of an aqueous matrix to be treated can be performed in a time comprised between 10 and 20 minutes.

The magnetic separation module of the present invention comprises a tank in the form of a vessel, comprising an opening at one end of the tank, such that it is open, whereas in the opposite part of the tank it comprises a collection portion which ends in a closed end. The magnetic separation module of the present invention also comprises magnetic separation means comprising at least one magnetic field generating element, and automatic actuation means for actuating the at least one magnetic field generating element, which can be controlled by a control unit so that, in the work mode, the at least one magnetic field generating element generates a magnetic field inside the tank to attract and retain the formed aggregates and the free magnetic material particles of the mixture inside the tank; and in the standby mode, the at least one magnetic field generating element does not generate a magnetic field or does not generate a magnetic field that is sufficient to attract or retain the formed aggregates and the free magnetic material particles of the mixture inside the tank.

In its working position, the magnetic separation module is arranged such that the mouth is oriented looking upwards, whereas the part of the tank in which the collection portion is located is arranged in the lower part. In this orientation of the magnetic separation module, the collection of the different materials by gravity in the collection portion located in the lower part is favored.

The magnetic separation module of the present invention operates according to the following steps. In a first step, a specific volume of the aqueous matrix to be treated and a specific amount of magnetic material particles are filled through the mouth of the tank, such that, in the operating mode, the tank comprises the mixture of the aqueous matrix to be treated with the magnetic material particles. Said aqueous matrix to be treated comprises microplastics, non-plastic organic particles and, optionally, inorganic particles. In one embodiment, the aqueous matrix to be treated is premixed with the magnetic material particles. In an alternative embodiment, the specific amount of magnetic material particles is incorporated separately, also through the same mouth of the tank, such that in this alternative embodiment the mixture of the magnetic material particles with the aqueous matrix to be treated is performed inside the tank. In this alternative embodiment, when the specific amount of suspended magnetic material particles is incorporated into the specific volume of the aqueous matrix, aggregates between the microplastics of the aqueous matrix and the magnetic material particles, in addition to aggregates between the non-plastic organic particles of the aqueous matrix and the magnetic material particles, are formed in the resulting mixture. Said formation of aggregates may even be generated spontaneously, although it is generated especially, for example, upon stirring the mixture inside the tank. Preferably, at least 90% by weight of microplastics with respect to the total weight of microplastics present in the aqueous matrix form aggregates with the magnetic material particles. All or part of the non-plastic organic particles present in the aqueous matrix form aggregates with the magnetic material. Preferably, at least 50% by weight of the non-plastic organic particles with respect to the total weight of non-plastic organic particles present in the aqueous matrix form aggregates with the magnetic material particles.

In a second step, the work mode of the at least one magnetic field generating element is activated, such that a magnetic field is generated inside the tank which attracts and retains both the different aggregates formed and the free magnetic material particles of the mixture contained inside the tank. In that sense, the magnetic separation means are able to separate the magnetizable aggregates and particles resulting from the mixture of the aqueous matrix to be treated with the magnetic material particles and effectively retains them in the at least one magnetic field generating element. In other words, the at least one magnetic field generating element separates by its magnetic attraction force and retains the aggregates formed between the microplastics of the aqueous matrix and the magnetic material particles, the aggregates formed between the non-plastic organic particles and the magnetic material particles and the free magnetic material particles. In that sense, all or part of the magnetizable particles or aggregates resulting from the mixture contained in the tank are separated by the at least one magnetic field generating element. The microplastics contained in the aqueous matrix are thereby separated from the rest of the aqueous matrix by means of the formation of aggregates of said microplastics with the added magnetic material particles. In that sense, the magnetic separation module of the invention is capable of magnetically separating the microplastics from a specific volume of an aqueous matrix comprising microplastics, non-plastic organic particles and, optionally, inorganic particles, with a high degree of efficiency. Furthermore, advantageously, as indicated above, the magnetic separation module of the invention separates the microplastics in a reduced period of time.

In a third step, a predefined time after the second step and with the at least one magnetic field generating element in the work mode, the aggregates formed between the microplastics of the aqueous matrix and the magnetic material particles, the aggregates formed between the non-plastic organic particles and the magnetic material particles, and the free magnetic material particles have been retained in the at least one magnetic field generating element, whereas the residual aqueous fraction of the mixture together with the magnetic material particles that have not been retained by the at least one magnetic field generating element are housed in the collection portion of the tank. In said collection portion, the residual aqueous fraction of the mixture together with the magnetic material particles that have not been retained by the at least one magnetic field generating element are removed from the tank. The removal is preferably automatic, for example, by means of providing a conduit that fluidically communicates the collection portion of the tank with an outer part of the tank, for example, propelled by propulsion means such as a pump. In that sense, in one embodiment, the magnetic separation module further comprises a conduit that fluidically communicates the collection portion of the tank with an outer part of the tank.

In a fourth step, once the residual aqueous fraction of the mixture together with the magnetic material particles that have not been retained have been removed from the tank, the at least one magnetic field generating element switches to the standby mode, such that it does not generate a magnetic field or does not generate a magnetic field that is sufficient to retain the formed aggregates and the free magnetic material particles of the mixture contained inside the tank. In this fourth step, the formed aggregates and the free magnetic material particles of the mixture that were previously retained fall by gravity and are housed in the collection portion of the tank. In said collection portion, the formed aggregates and the free magnetic material particles of the mixture are removed from the tank. The removal is preferably automatic, for example, by means of providing a conduit that fluidically communicates the collection portion of the tank with an outer part of the tank, for example, propelled by propulsion means such as a pump. In that sense, in one embodiment, the magnetic separation module further comprises a second conduit that fluidically communicates the collection portion of the tank with an outer part of the tank.

In one embodiment, the magnetic separation means are configured so that, in the work mode, the at least one magnetic field generating element is substantially in contact with a part of the outer surface of the tank. Since the at least one magnetic field generating element is substantially in contact with a part of the outer surface of the tank in the work mode, the magnetic field created with interposition of the wall of the tank is powerful enough to operate effectively. In the context of the present invention, the expression "substantially in contact" is to be interpreted as being in physical contact or in a position close to a part of the tank.

In one embodiment, the magnetic separation means of the magnetic separation module comprise more than one magnetic field generating element, for example, two magnetic field generating elements.

The at least one magnetic field generating element is preferably selected from one of the following types of magnets: a permanent magnet, an electromagnet, or a switchable magnet which can be switched on/off.

In one embodiment, the at least one magnetic field generating element has a body with a configuration in block, cube, sphere, or disc form. The configuration in block form is preferred as it maximizes the contact surface.

Preferably, the at least one magnetic field generating element is a ferrite, more preferably an alnico, even more preferably a samarium-cobalt, and even more preferably a neodymium magnet.

In one embodiment, the at least one magnetic field generating element is a permanent magnet, preferably a ferrite, more preferably an alnico, even more preferably a samarium-cobalt, and even more preferably a neodymium permanent magnet, and wherein the magnetic separation module comprises:
- magnet shifting means configured to adopt at least two different specific positions and connected to the automatic actuation means in order to:
   i. in the work mode, move the shifting means closer to the tank to a first working position in which the magnet is substantially in contact with the tank; and
   ii. in the standby mode, move the shifting means away from the tank to a second standby position in which the magnet is not substantially in contact with the tank.

In this embodiment in which the at least one magnetic field generating element is a magnet, the magnet shifting means preferably comprise an articulated mechanical arm in which the at least one magnet is arranged. In a specific embodiment, the mechanical arm is articulated at one of its ends by means of a hinged attachment and the at least one magnet is arranged on said mechanical arm, and the mechanical arm is attached by the part where the hinged attachment is located to an outer part of the tank. In this embodiment, the automatic actuation means are connected to the articulated mechanical arm for commanding its movement between the two different specific positions.

In this embodiment in which the at least one magnetic field generating element is a magnet, preferably the automatic actuation means comprise a linear actuator.

In that sense, in a specific embodiment in which the magnet shifting means comprise an articulated mechanical arm and the automatic actuation means comprise a linear actuator, said linear actuator is configured and arranged to act on the mechanical arm, shifting it between the two different positions, for example, the linear actuator being arranged in the lower part of the mechanical arm.

In an embodiment that is an alternative to the permanent magnet, the at least one magnetic field generating element is an electromagnet or a switchable magnet which can be switched on/off, and in which the automatic actuation means comprise switching means connected to the electromagnet or to the switchable magnet and said switching means are adapted for:
i. in the work mode, activating the electromagnet or the switchable magnet to generate a predetermined magnetic field, and
ii. in the standby mode, deactivating the electromagnet or the switchable magnet so as not to generate a magnetic field.

In the case of an electromagnet being selected, said electromagnet is arranged in a fixed position in the magnetic separation module and is configured to switch between two different states under the application of an electric current or the absence thereof, namely a first working state in which the electromagnet generates a predetermined magnetic field and a second standby state in which the electromagnet does not generate a magnetic field. In other words, in the case of the electromagnet the switching means are electric switching means.

In the case of a switchable magnet being selected, said switchable magnet is arranged in a fixed position in the magnetic separation module and is configured to switch between two different states under the application of a mechanical activation or the absence thereof, namely a first working state in which the switchable magnet generates a predetermined magnetic field and a second standby state in which the switchable magnet does not generate a magnetic field. In other words, in the case of the switchable magnet the switching means are mechanical switching means.

In a specific embodiment of this embodiment in which the at least one magnetic field generating element is an electromagnet or a switchable magnet, said electromagnet or switchable magnet is arranged in a position substantially in contact with a part, preferably a part of the outer surface of the wall of the tank of the magnetic separation module. In this specific embodiment, the at least one electromagnet or switchable magnet operates in the work mode efficiently, generating a specific magnetic field inside the tank from outside the tank to attract and retain the formed aggregates and the free magnetic material particles of the mixture inside the tank in a specific inner area of the tank. This specific inner area of the tank corresponds to an area in which the at least one electromagnet or switchable magnet is arranged in the outer part of the wall of the tank. In other words, the electromagnetic force of the at least one electromagnet or switchable magnet acts through the wall of the tank. This position of the at least one magnetic field generating element considerably favors the cleaning of the at least one magnet and furthermore prevents the corrosion thereof. In one embodiment, the tank has an approximate wall thickness of 2 mm, which ensures that the electromagnetic force of the at least one electromagnet or switchable magnet acts through the wall of the tank.

In one embodiment, the body of the tank has a substantially cylindrical configuration extending along a longitudinal direction; the collection portion of the tank comprises a longitudinal section tapering in the direction going from the mouth to the lower end of the collection portion, wherein at least one of the sides of the longitudinal section is inclined with an inclination with respect to the perpendicular direction relative to the longitudinal direction comprised between 1° and 85°, preferably between 1° and 60°, and more preferably between 10° and 25°. This tapering longitudinal section of the collection portion with this particular inclination favors the fluid falling by gravity and being effectively located at the closed lower end for the subsequent collection thereof. In a particular case, the closed end of the collection portion is arranged shifted with respect to the central longitudinal axis of the tank. This shifted arrangement with respect to the central longitudinal axis of the tank of the closed end of the collection portion allows including, in one embodiment, automatic stirring means arranged on the central longitudinal axis of the tank. This tapering longitudinal section of the collection portion with this particular inclination in combination with the closed lower end shifted with respect to the central longitudinal axis of the tank favor, when combined, the fluid falling by gravity and being effectively located at the closed lower end for the subsequent collection thereof. In a more specific embodiment, the closed lower end of the collection portion is arranged in the vicinity of the wall of the tank. In other cases, the closed end of the collection portion is arranged centered with respect to the central longitudinal axis of the tank.

In one embodiment, the tank is made of glass. Glass has the advantage that the magnetic material particles used, preferably magnetic iron material particles, have a lower adherence to glass than to other alternative materials, such as stainless steel or plastic.

In one embodiment, the magnetic separation module further comprises an outer receptacle configured to be arranged on the outer part of the tank, enclosing a part of or the entire tank. Preferably, the outer receptacle is configured to be arranged on the outer part of the tank, enclosing the entire tank.

Said outer receptacle has larger dimensions than the tank so as to enable being arranged over the tank. The main function of said outer receptacle is to protect the tank. In one embodiment, said outer receptacle has a rigid body having an elongated configuration according to the longitudinal direction, and furthermore has a cover to close the outer receptacle at one end. Furthermore, the outer receptacle comprises in the body at least one opening to receive the at least one magnetic field generating element when it is in the work mode position. In this way, the at least one magnetic field generating element can directly contact or be close to the outer surface of the tank through said opening. In one embodiment, the outer receptacle is metallic. In one embodiment, the cover comprises different openings: a respective opening for the passage of each of the two conduits for removing fluids from the collection portion, and at least one opening for introducing the aqueous matrix to be treated or the mixture of the aqueous matrix premixed with the magnetic material particles. In one embodiment, the magnetic separation module further comprises one or a plurality of clamps suitable for securing the mixing tank in a fixed specific position inside the outer receptacle.

In one embodiment, the magnetic separation module further comprises automatic stirring means arranged inside the tank, preferably mechanical, magnetic, electrostatic, bubble, and/or ultrasonic stirring means, and wherein the automatic stirring means are adapted for receiving from a control unit at least one signal corresponding to a stirring parameter. Said automatic stirring means are configured to be operable through automatic operation means. The predetermined stirring parameters depend on the type of stirring used. In one embodiment, when the automatic stirring means are mechanical stirring means, such as an elongated rotating element, said stirring parameters are preferably the stirring time, the rotating speed of the mechanical element and/or the direction of rotation of the mechanical element. Said stirring parameters may vary based on the type of aqueous matrix to be treated. In one embodiment, when the automatic stirring means are an elongated rotating element, which can be rotated by the action of automatic operation means, said elongated rotating element is arranged in a central position inside the tank, i.e., on the central longitudinal axis of the tank.

As indicated above, the magnetic separation module of the present invention operates according to different consecutive steps, where in the alternative embodiment of the first step the tank is filled through the mouth with a specific volume of the aqueous matrix to be treated and, separately (i.e., without there being a pre-mixing), a specific amount of magnetic material particles. In this alternative embodiment, this mixing of the magnetic material particles together with the aqueous matrix to be treated is performed inside the tank. The automatic stirring means greatly favor the generation of the desired mixture and the formation of aggregates between the microplastics and the magnetic material particles.

In a more specific embodiment, when the automatic stirring means are mechanical stirring means, the automatic stirring means comprise a mechanical stirring element arranged extending in the longitudinal direction of the tank and along at least one inner part of the tank.

In one embodiment, the magnetic separation module further comprises means for detecting the level of the tank adapted for sending at least one signal to a control unit upon detecting at least one predetermined level of fluid inside the tank. Here, fluid refers to the mixture of the aqueous matrix to be treated together with the magnetic material particles. Preferably, the means for detecting the level of the tank are a level sensor.

In one embodiment, the magnetic separation module further comprises one or a plurality of sprinklers adapted for ejecting into the tank a specific amount of pressurized liquid, preferably pressurized water, and wherein the one or the plurality of sprinklers are adapted for receiving from a control unit at least one signal to start ejecting pressurized liquid.

Preferably, the pressurized liquid ejected by the sprinkler or sprinklers is acid water or distilled water.

As a result of providing the one or the plurality of sprinklers, the aggregates and the free magnetic material particles that have been retained by the at least one magnetic field generating element when it is in the work mode can be detached and, therefore, effectively collected, to favor the subsequent removal thereof from the tank. Furthermore, the liquid ejected by the sprinkler or sprinklers causes the product to be removed in the semisolid state to remain in a more liquid state and thereby enabling it to be fluidically propelled with greater ease.

In one embodiment, the one or the plurality of sprinklers are arranged in the body of the tank, and more preferably in the part where the mouth is located. As a result of this advantageous arrangement of the one or the plurality of sprinklers in this area of the tank, an effective sweeping can be achieved, from the area of the mouth to the area in which the lower end of the collection portion is located, i.e., from top to bottom.

In a particular embodiment in which the device comprises an outer receptacle with a cover, said cover further comprises a respective opening for each of the sprinklers.

In a more specific embodiment, the magnetic separation module comprises at least two sprinklers, the first sprinkler being configured to eject acid water and the second sprinkler being configured to eject distilled water. The first acid water sprinkler is configured and arranged oriented so as to directly strike the area in which the magnetizable aggregates and particles have been retained or are retained, such that said first sprinkler helps in said magnetizable particles or aggregates being deposited in the collection portion of the tank for the collection thereof after the magnetic separation phase has been completed. The second distilled water sprinkler is configured and arranged so as to strike other different part inside the tank, namely the inner walls of the tank, so said second sprinkler helps to collect those particles that may have remained adhered on the inner walls of the tank after the mechanical stirring phase.

In a second inventive aspect, the invention provides a system for the determination of parameters for the quantification of microplastics in an aqueous matrix comprising microplastics, non-plastic organic particles and, optionally, inorganic particles, wherein the system comprises:
- a magnetic separation module according to any embodiment of the first inventive aspect;
- a microwave reactor module to selectively oxidize the non-plastic organic particles which are or are not in the form of aggregates with the magnetic material particles of an aqueous suspension of aggregates, wherein the microwave reactor module comprises:
   - a microwave, and
   - a reactor vessel arranged in an inner part of the microwave, said reactor vessel being configured to comprise, in the operating mode, a specific volume of an aqueous suspension of aggregates during selective oxidation,
   wherein the tank of the magnetic separation module is fluidically connected to the reactor vessel by means of a first fluidic connection, wherein the first fluidic connection is configured to allow the entry of an aqueous suspension of aggregates into the reactor vessel;

- propulsion means interposed in the first fluidic connection adapted for propelling the aqueous suspension of aggregates from the tank of the magnetic separation module to the reactor vessel; and
- a control unit connected to the propulsion means of the first fluidic connection and to the automatic actuation means of the magnetic field generating element, wherein the control unit is adapted for receiving at least the values of the predetermined actuation time of the magnetic field generating element in the tank and of the predetermined selective oxidation time in the reactor vessel, and based on said values, commanding:
   - the actuation of the automatic actuation means of the magnetic field
   generating element so that:
   - the magnetic field generating element switches to the work mode; and
   - the magnetic field generating element switches to the standby mode, when the predetermined actuation time of the magnetic field generating element has elapsed;
- the actuation of the propulsion means of the first fluidic connection to:
   - start propelling the fluid in the first fluidic connection; and
   - stop propelling the fluid in the first fluidic connection, when the reactor vessel is filled with a predetermined volume of fluid.

The expression "aqueous suspension of aggregates" from the tank of the magnetic separation module to the reactor vessel refers to an aqueous suspension prepared from the aggregates and the free magnetic material particles retained by the at least one magnetic field generating element of the magnetic separation module. In addition to said aggregates and free magnetic material particles retained by the at least one magnetic field generating element of the magnetic separation module, the aqueous solution comprises a certain proportion of water. The specific amount of pressurized liquid ejected inside the tank by the one or the plurality of sprinklers serves to automatically prepare the aqueous suspension of aggregates to be sent to the microwave reactor module. In a preferred embodiment, the amount of water, preferably acid water, ejected by the one or the plurality of sprinklers for a certain time to resuspend the aggregates and the free magnetic material particles, preferably magnetic iron material particles, is a total volume comprised in the range of 1 mL to 1000 mL, more preferably 10 mL to 500 mL, even more preferably 10 mL to 250 mL, most preferably 10 mL to 100 mL. The one or more sprinklers adapted for striking the aggregates thereby add a specific amount of water, preferably acid water, to the mixture contained inside the tank of the magnetic separation module, such that an approximate volume of the aqueous suspension of aggregates is sent to the reactor vessel of the microwave reactor module through the first fluidic connection of the system.

One of the advantages of the system of the present invention is that it allows, in a semiautomatic or automatic and effective manner, the determination of parameters for the quantification of microplastics in an aqueous matrix comprising, in addition to the microplastics, non-plastic organic particles and, optionally, inorganic particles, regardless of the composition of the aqueous matrix to be treated and the chemical nature, size, shape, color and density of the microplastics comprised in the aqueous matrix to be treated. Since the system allows for a semiautomatic or automatic process, possible human errors that may occur during the operation of the system are reduced or eliminated.

Another advantage of the system of the present invention is that it is simple and inexpensive to manufacture and assemble.

Yet another advantage of the system of the present invention is that it allows a relatively rapid process for the determination of parameters for the quantification of microplastics in an aqueous matrix, such that each analysis of an aqueous matrix to be treated is performed in a short analysis time which can be about 2.5 hours.

Preferably, before starting up the system for the determination of parameters for the quantification of microplastics in an aqueous matrix of the present invention, the suspended solid particles present in the aqueous matrix will be determined, as the amount and composition thereof helps to determine the amount of magnetic material particles, preferably magnetic iron material particles, and more preferably magnetic magnetite material particles, to be added in the tank of the invention.

In one embodiment, the microwave is configured with a microwave power comprised in the range of 50 to 1500 W, more preferably 100 to 1200 W, even more preferably 200 to 1100 W, most preferably 350 to 1000 W.

In one embodiment, the reactor vessel is arranged in an upper part of the microwave, which considerably favors the filling of the reactor vessel through the first fluidic connection of the system and therefore increases the efficiency of the system.

In one embodiment, the system according to the second inventive aspect further comprises:
- a plurality of reservoirs adapted for comprising a volume of a plurality of reagents, wherein the reservoirs are fluidically connected to the reactor vessel by means of at least one second fluidic connection, wherein the second fluidic connection is configured to allow the entry of a predetermined amount of one or more reagents into the reactor vessel;
- means for measuring the pH of the aqueous suspension of aggregates comprised, in the operating mode, inside the reactor vessel; and
- means for the automatic metering of one or more reagents from the plurality of reservoirs,
wherein the control unit is furthermore connected to the means for measuring the pH of the aqueous suspension of aggregates and to the means for the automatic metering of one or more reagents, and wherein the control unit is adapted for receiving the pH measurement from the means for measuring the pH and commanding, based on said value of the pH measurement, the metering of a specific amount of a reagent from the plurality of reservoirs.

For the correct operation of the reaction inside the reactor, it is desirable for the pH of the aqueous suspension of aggregates comprised, in the operating mode, inside the reactor vessel to preferably be in ranges between 1 and 13, more preferably between 2 and 10, more preferably between 2 and 8, more preferably between 2 and 6, even more preferably between 2 and 4, most preferably about 3. To that end, the pH of the aqueous suspension of aggregates inside the reactor vessel is conditioned by adding a specific volume through the means for the automatic metering of a basic reagent, such as for example sodium hydroxide, potassium hydroxide or sodium carbonate, among others, preferably sodium hydroxide, or of an acidic reagent, such as for example nitric acid, hydrochloric acid or sulfuric acid, among others, preferably nitric acid, from the plurality of reservoirs until reaching a pH value within the range defined above.

In one embodiment, at least two reservoirs are provided, one for comprising a basic reagent and another one for comprising an acidic reagent.

By way of preferred example, the reagents that are added to the above aqueous suspension to carry out the selective oxidation of the non-plastic organic particles are selected from one or more of the following: salt of a transition metal and hydrogen peroxide. Preferably the transition metal of the salt is Fe, Cu, Mn or Co. More preferably, an iron salt selected from the group consisting of iron nitrate, iron chloride, iron sulfate and a mixture thereof, preferably iron nitrate, is used as a precursor of iron in solution.

The Fenton reaction oxidation process which is carried out inside the microwave reactor module to selectively oxidize the non-plastic organic particles which are or are not in the form of aggregates with the magnetic material particles of an aqueous suspension of aggregates is rapid and furthermore has a low operating cost.

In a particular embodiment, the operating process that is carried out inside the microwave reactor module is the following: the following reagents are added in the aqueous suspension contained inside the reactor vessel: a salt of a transition metal selected from Fe, Cu, Mn and Co, and furthermore hydrogen peroxide.

In a preferred embodiment, the amount of iron added is the amount needed to provide a final concentration of dissolved iron in the aqueous suspension itself inside the reactor that is in the range of 1 mg/L to 1000 mg/L, more preferably 1 mg/L to 100 mg/L, even more preferably 5 mg/L to 100 mg/L, most preferably 10 mg/L to 100 mg/L.

In a preferred embodiment, the amount of hydrogen peroxide added to the aqueous suspension during the step of oxidation inside the reactor is the amount needed to provide a measured final concentration in the aqueous suspension itself that is in the range of 10 mg/L to 100 g/L, more preferably 10 mg/L to 50 g/L, even more preferably 100 mg/L to 50 g/L, even more preferably 100 mg/L to 25 g/L, even more preferably 1 g/L to 25 g/L, most preferably 1 g/L to 10 g/L.

In a particular embodiment, both the iron salt and the hydrogen peroxide are added automatically in a single addition at the beginning of the oxidation reaction.

Preferably, the method of the invention is performed by adding the iron salt and the hydrogen peroxide in several consecutive cycles to favor the reaction.

In a preferred embodiment, the reaction time for carrying out the selective microwave-assisted Fenton oxidation to achieve high degrees of elimination of interfering organic particles is comprised in the range of 1 s to 2 h, more preferably 1 s to 1 h, even more preferably 1 s to 30 min, even more preferably 1 s to 10 min, most preferably 2 min to 5 min. Reaction times refer to the total oxidation time that can be performed either by means of two or more shorter cycles, for example, 2, 3, 4, 5 or 6 cycles, or all at once. This confirms that the Fenton reaction oxidation process that is carried out inside the microwave reactor module is very rapid, which speeds up the entire process that is carried out inside the system of the invention and increases its performance.

In a preferred embodiment, the temperature of the suspension of aggregates comprised, in the operating mode, inside the reactor vessel during the entire oxidation process during the microwave-intensified Fenton reaction reaches at least 80°C.

In a preferred embodiment, the pH of the suspension of aggregates comprised, in the operating mode, inside the reactor vessel during the entire oxidation process is comprised in the aforementioned ranges (i.e., in ranges preferably between 1 and 13, more preferably between 2 and 10, more preferably between 2 and 8, more preferably between 2 and 6, even more preferably between 2 and 4, most preferably about 3). To that end, after each oxidation cycle in the microwave reactor module, said pH is automatically adjusted by adding to the system either of the reagents mentioned above to achieve said desired pH.

Preferably, the means for measuring the pH of the aqueous suspension of aggregates comprise a pH-meter. In one embodiment, the means for measuring the pH are automatic and comprise, in addition to the pH-meter, means for automatically shifting the pH-meter between two different limit positions: a first limit position corresponding to when the pH-meter is at a specific level or below said level of the reactor vessel, and a second limit position corresponding to when the pH-meter is outside of this specific level of the reactor vessel; and wherein the control unit is adapted for commanding the operation of the means for shifting the pH-meter between the first and the second limit positions and vice versa. Preferably, the shifting of the pH-meter is in a rectilinear direction. In a particular embodiment, said means for linearly shifting the pH-meter between two different limit positions comprise an electric motor, a worm screw and a nut that shifts along the worm screw and is integral with the pH-meter. Additionally, the means for shifting the pH-meter, preferably in a rectilinear direction, may comprise two limit switch sensors, one for each of the limit positions, connected to the control unit, wherein the control unit is configured to command the operation of the motor to command the rotation of the worm screw. The pH-meter operates automatically in the first limit position to be in contact with the solution comprised inside the reactor vessel in the work mode, and in the second limit position not to be in contact with the solution comprised inside the reactor vessel.

In one embodiment, the system according to the second inventive aspect further comprises respective propulsion means each connected to a respective reagent reservoir. In a more specific embodiment, the propulsion means are configured so that each one propels one reagent from the plurality of reservoirs. Preferably, the propulsion means are one respective peristaltic pump per reservoir.

In one embodiment, the system according to the second inventive aspect further comprises at least two additional reservoirs to comprise a volume of water, preferably acid water, and distilled water, respectively, the at least two additional reservoirs being fluidically connected:
- to the reactor vessel by means of at least a fifth fluidic connection, wherein the fifth fluidic connection is configured to allow the entry of a predetermined amount of water, preferably acid water, and/or distilled water from the at least two reservoirs for water and distilled water into reactor vessel; and
- to the tank by means of at least a sixth fluidic connection, wherein the sixth fluidic connection is configured to allow the entry of a predetermined amount of water, preferably acid water, and/or distilled water from the at least two reservoirs for water and distilled water into the tank.

In one embodiment, the system according to the second inventive aspect further comprises first automatic filtration means and second automatic filtration means. The first automatic filtration means are adapted for filtering all the particles that have not formed an aggregate with the magnetic material which are present inside the tank of the magnetic separation module, wherein the first filtration means comprise first support means for at least one first filter and a third fluidic communication connecting the first support means for at least one first filter with the inside of the collection portion of the tank, wherein the third fluidic connection is configured to allow the exit of the particles that have not formed an aggregate with the magnetic material from inside the collection portion of the tank towards the at least one first filter. The second automatic filtration means are adapted for filtering the aggregates that have been oxidized inside the vessel of the microwave reactor module, wherein the second filtration means comprise second support means for at least one second filter and a fourth fluidic communication connecting the second support means for at least one second filter with the inside of the collection portion of the reactor vessel, wherein the fourth fluidic communication is configured to allow the exit of the aggregates that have been oxidized from inside the collection portion of the reactor vessel towards the at least one second filter. Furthermore, when the system comprises first automatic filtration means and second automatic filtration means, the control unit is further adapted for commanding the actuation of the propulsion means of the first fluidic connection to further start propelling the fluid of the first fluidic connection from the tank to the reactor vessel when the filtration of water and the rest of the non-aggregated particles through the third fluidic connection has finished.

As a result of the first filtration means the particles that have not formed an aggregate with the magnetic material which are present inside the tank of the magnetic separation module are collected on a first filter; and as a result of the second automatic filtration means the aggregates that have been oxidized inside the vessel of the microwave reactor module are collected on a second filter.

In a specific embodiment, the first filtration means further comprise at least one first filter suitable for withstanding high muffle furnace temperatures, preferably a glass fiber or quartz fiber filter; and the second filtration means further comprise at least one second filter suitable for withstanding high muffle furnace temperatures, preferably a glass fiber or quartz fiber filter. The at least one first filter and the at least one second filter are consumable. In some embodiments, the first filtration means and the second filtration means comprise two or more respective filters because the existence of two or more filters in each of the filtration means favors them not becoming saturated so easily.

In a specific embodiment, the first and second support means each comprises two independent blocks, wherein at least one of these blocks is adapted for being shifted with respect to the other block so as to thereby acquire two different limit positions, a first position in which the two blocks are spaced apart from one another in the standby position, and a second position in which the two blocks are in contact with one another in the working position (i.e., in the filtering operation). In this specific embodiment, each first and second support means further comprise respective contact elements arranged on the surface of each block adapted so that, in the working position, at least one filter is arranged on one of the contact elements, such that in the working position both contact elements are in contact with the at least one filter. In this specific embodiment, each first and second support means further comprise automatic shifting means for shifting at least one of the blocks with respect to the other, preferably in a perpendicular direction with respect to the contact surface of the first and second blocks. In one embodiment, said automatic shifting means comprise a rotating worm screw with a nut that can shift along the worm screw, and a drive motor or similar element to rotate the worm screw, and wherein the block which is movable is secured to the nut. Optionally, said automatic shifting means can comprise limit switch sensors in the two different limit positions.

In a preferred embodiment, the system according to the second inventive aspect further comprises at least one vacuum pump connected to the third fluidic communication and/or to the fourth fluidic communication, wherein the at least one vacuum pump is adapted to generate a vacuum inside the third and/or fourth fluidic communications, wherein the control unit is connected to said at least one vacuum pump for commanding:
- the actuation of the at least one vacuum pump when the actuation time of the magnetic field generating element inside the tank for a vacuum pump operation time for the first filter has elapsed, and/or
- the actuation of the at least one vacuum pump when the selective oxidation time inside the reactor vessel for a vacuum pump operation time for the second filter has elapsed.

The at least one vacuum pump connected to the third fluidic communication and/or to the fourth fluidic communication facilitates the arrival (by means of the generation of a vacuum) of the fluids by means of the third fluidic communication and/or the fourth fluidic communication to the first or second filter.

In one embodiment, the reactor vessel of the microwave reactor module comprises a body with a mouth at one end of the reactor vessel, said mouth being adapted for the entry of the specific volume of an aqueous suspension of aggregates, wherein the body of the reactor vessel ends in a collection portion, the collection portion being arranged in a part of the body opposite to where the mouth is located, wherein the collection portion comprises a closed end, and wherein the collection portion is adapted, in the operating mode, for collecting in this collection portion:
- the particles that have not been oxidized after the selective oxidation phase inside the reactor vessel, i.e., the non-oxidized non-plastic organic particles, the magnetic material particles, and the microplastics.

In one embodiment, the body of the reactor vessel has a substantially cylindrical configuration extending along a longitudinal direction; the collection portion of the reactor vessel comprises a longitudinal section tapering in the direction going from the mouth to the lower end of the collection portion, wherein at least one of the sides of the longitudinal section is inclined with an inclination with respect to the perpendicular direction relative to the longitudinal direction comprised between 1° and 85°, preferably between 1° and 60°, and more preferably between 10° and 25°. Preferably the closed end of the collection portion is arranged shifted with respect to the central longitudinal axis of the reactor vessel. This shifted arrangement of the closed end of the collection portion with respect to the central longitudinal axis of the reactor vessel allows including, in one embodiment, automatic stirring means of the reactor vessel arranged on the central longitudinal axis of the reactor vessel. In other embodiments, the closed end of the collection portion of the reactor vessel is arranged in the center of the reactor vessel, i.e., on the central longitudinal axis of the reactor vessel. This tapering longitudinal section of the collection portion with this particular inclination in combination with the closed lower end shifted with respect to the central longitudinal axis of the reactor vessel favor the fluid falling by gravity and being located at the closed lower end. In a more specific embodiment, the closed lower end of the collection portion is arranged close to the wall of the reactor vessel.

In one embodiment, the reactor vessel of the microwave reactor module is made of glass. Glass has the advantage that the magnetic material particles, preferably magnetic iron material particles, have a lower adherence to glass than to other alternative materials, such as stainless steel or plastic.

In one embodiment, the microwave reactor module further comprises means for detecting the level of the reactor vessel adapted for measuring at least one predetermined level of fluid inside the reactor vessel, wherein the means for detecting the level of the reactor vessel are adapted for sending at least one signal to the control unit upon detecting said at least one predetermined level. In a more specific embodiment, the means for detecting the level of the reactor vessel are preferably a level sensor.

In one embodiment, the microwave reactor module further comprises one or a plurality of sprinklers adapted for ejecting into the microwave reactor module pressurized liquid, preferably pressurized water and more preferably pressurized acid water, wherein the one or the plurality of sprinklers are adapted for receiving from the control unit at least one signal to start ejecting pressurized liquid, and wherein the one or the plurality of sprinklers are preferably arranged in an upper part of the reactor vessel. The one or the plurality of sprinklers are configured and arranged for collecting the aggregates and the free magnetic material particles that have been retained for the most part on the inner walls of the reactor vessel.

In one embodiment, the system further comprises a casing adapted for enclosing at least the magnetic separation module and the microwave reactor module. In a specific embodiment, the casing further comprises, on an outer part, a user interface, preferably a touch screen, adapted for visualizing piece of datum or a plurality of data from the control unit and/or for entering input data in the control unit. In a specific embodiment, the casing further comprises a portion in the form of a receptacle, accessible to the user, adapted for housing at least one first filter and one second filter. In a specific embodiment, the casing further comprises an access door to the microwave reactor.

All the features described in this specification (including the claims, the description, and the drawings) and/or all the elements of the magnetic separation module and of the system described can be combined in any combination, with the exception of the combinations of such mutually exclusive features.

### DESCRIPTION OF THE FIGURES

These and other features and advantages of the invention will be more clearly understood in view of the detailed description of the invention which is made apparent from a preferred embodiment of the invention, given solely by way of example and without being limited to same, in reference to the drawings.
Figure 1 shows a schematic perspective view of the magnetic separation module according to an embodiment of the first inventive aspect of the invention, wherein the magnetic field generating element is in the standby mode position.
Figure 2 shows the same perspective view of the magnetic separation module of Figure 1, but in this case the magnetic field generating element is in the work mode position.
Figure 3 shows a schematic perspective view of the tank of the magnetic separation module of Figure 1.
Figure 4 shows a top plan view of the tank of Figure 3.
Figure 5 shows a view sectioned along A-A according to Figure 4.
Figure 6 shows a schematic perspective view of the microwave reactor module of the system according to an embodiment of the second inventive aspect of the invention.
Figure 7 shows the schematic perspective view of Figure 6 but with a front part of the casing removed.
Figure 8 shows a perspective view of the reactor vessel of Figure 6.
Figure 9 shows a top plan view of the reactor vessel of Figure 6.
Figure 10 shows a view sectioned along B-B according to Figure 9.
Figures 11-13 show respective diagrams of the fluidic connections of the different elements of the system according to an embodiment of the second inventive aspect of the invention at different times of the operating process of the system.
Figure 14 shows a schematic view of the system according to an embodiment of the second inventive aspect of the invention in which one of the outer walls of the outer casing of the system has been removed.
Figure 15 shows a schematic view of the system according to an embodiment of the second inventive aspect of the invention seen from the outer part.

### DETAILED DESCRIPTION OF THE INVENTION

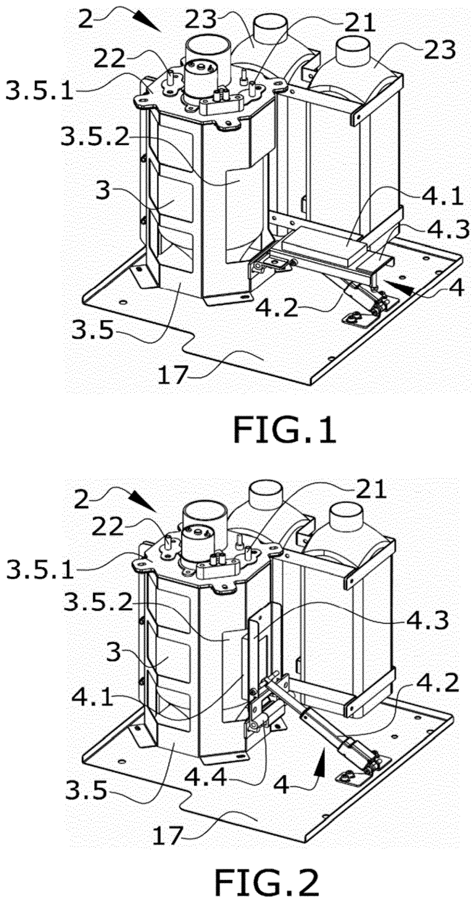

Figures 1 and 2 show a depiction of a magnetic separation module (2) according to an embodiment of the invention for separating microplastics from an aqueous matrix to be treated which comprises microplastics, non-plastic organic particles and, optionally, inorganic particles.

As shown in the embodiment of the magnetic separation module (2) of Figures 1 and 2, the magnetic separation module (2) comprises a tank (3) and magnetic separation means (4). The tank (3) comprises, in the operating mode, a mixture consisting of a specific volume of the aqueous matrix to be treated and of a specific amount of magnetic material particles added to said aqueous matrix. The contact of the aqueous matrix to be treated with the added magnetic material particles forms microplastic/magnetic material particle aggregates, in addition to non-plastic organic particle/magnetic material particle aggregates. In that sense, in the operating mode, the mixture inside the tank (3) comprises microplastic/magnetic material particle aggregates, non-plastic organic particle/magnetic material particle aggregates, and free magnetic particles, wherein both the two types of aggregates and the magnetic material particles are magnetizable. Figures 1 to 10 do not illustrate the aqueous matrix, or the particles, or the formed aggregates.

It can also be seen in Figures 1 and 2 that the magnetic separation means (4) comprise at least one magnetic field generating element (4.1) (in the illustrated example of Figures 1 and 2 it is a magnet-type magnetic field generating element (4.1)) and automatic actuation means (4.2) for actuating the at least one magnetic field generating element (4.1) (in the illustrated example of Figures 1 and 2 it is a linear actuator), wherein the automatic actuation means can be controlled by a control unit (not illustrated in the attached figures).

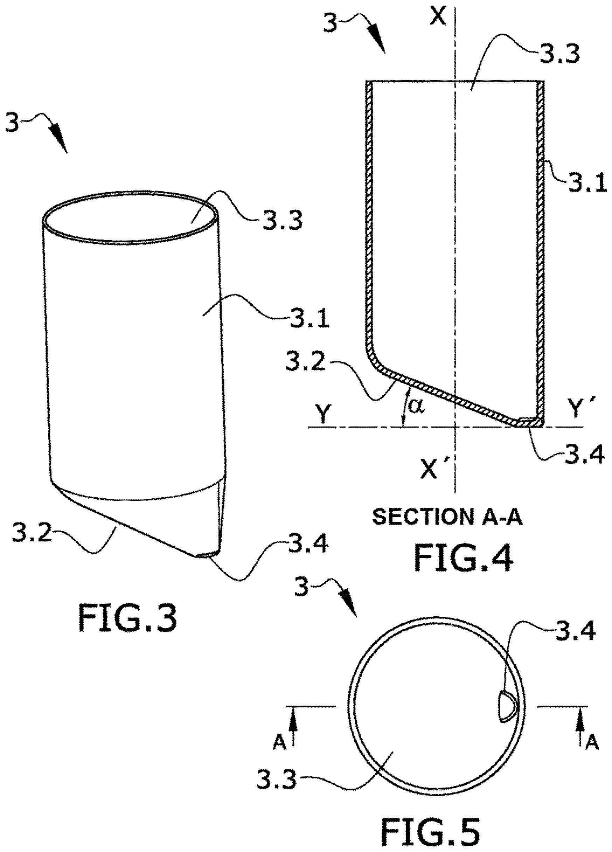

Figures 3 to 5 show various views of the tank (3) of the magnetic separation module (2) according to an embodiment of the invention. As shown in these figures, the tank (3) comprises a body (3.1) with a mouth (3.3) at one end for the entry of the specific volume of the aqueous matrix to be treated premixed with the magnetic material particles, or of the two parts of the mixture (aqueous matrix to be treated and magnetic material particles) separately, wherein the body (3.1) ends in a part opposite the mouth (3.3) in a collection portion (3.2), and wherein the collection portion (3.2) comprises a closed end (3.4).

The collection portion (3.2) of the tank (3) has such a configuration, in the operating mode, for collecting in this collection portion (3.2) the residual aqueous fraction of the mixture together with the magnetic material particles that have not been retained by magnetic separation means, and also the formed aggregates and the free magnetic material particles of the mixture that have been retained by magnetic separation means.

The magnetic separation module (2) operates such that a control unit (not illustrated in the attached figures) commands at least one magnetic field generating element (4.1) between two different work modes: a work mode in which the at least one magnetic field generating element (4.1), in this case in the form of a magnet, generates a magnetic field inside the tank (3) to attract and retain the formed aggregates and the free magnetic material particles of the mixture inside the tank (3); and a standby mode in which the at least one magnetic field generating element (4.1) does not generate a magnetic field or does not generate a magnetic field that is sufficient to retain the formed aggregates and the free magnetic material particles of the mixture in the at least one magnetic field generating element. The illustrated example of Figure 1 shows the magnetic separation module (2) in the standby mode in which the magnetic field generating element (4.1) is in a position parallel to the ground and at a specific distance from the tank (3) in which it does not generate a sufficient magnetic field inside the tank (3). In contrast, the illustrated example of Figure 2 shows the same magnetic separation module (2) but in the work mode in which the magnetic field generating element (4.1) is in another position, in this case in a vertical position with respect to the ground and in direct contact with a part of the outer surface of the tank (3), in which it does generate a magnetic field inside the tank (3) sufficient to attract and retain the formed aggregates and the free magnetic material particles of the mixture inside the tank (3).

This embodiment of Figures 1 and 2 shows the magnet shifting means comprising a mechanical arm (4.3) which is articulated at one of its ends and on which the magnet is arranged. The mechanical arm is articulated at one of its ends by means of a hinged attachment (4.4) and the mechanical arm (4.3) is attached at the part where the hinged attachment (4.4) is located to a lower outer part of the tank (3). In this illustrated embodiment, the automatic actuation means (4.2) in the form of a linear actuator are attached at one end to the lower part of the articulated mechanical arm (4.3) to drive the movement thereof between the two different specific positions, and at the other end they are attached to a plate (17). Preferably, the mechanical arm (4.3) and the linear actuator are configured so that the mechanical arm (4.3) shifts between two different positions, one with an orientation parallel to the ground and the other with an orientation perpendicular to the position parallel to the ground.

As shown in Figures 1 and 2, in one embodiment, the magnetic separation module (2) further comprises an outer receptacle (3.5), having larger dimensions than the tank (3), configured to be arranged on the outer part of the tank (3), enclosing in this case the entire tank (3). In this example, the outer receptacle (3.5) has a rigid body having an elongated configuration according to the longitudinal direction (X-X') formed by a side surface and a cover (3.5.1) which closes the outer receptacle (3.5) at one end, such that the mouth (3.1) of the tank (3) is closed and therefore inaccessible from the outside due to the provision of this cover (3.5.1) of the outer receptacle (3.5). Furthermore, the outer receptacle (3.5) comprises an opening (3.5.2) on the side surface thereof for receiving the at least one magnetic field generating element (4.1) when said magnetic field generating element (4.1) is in the work mode position. The at least one magnetic field generating element can thereby directly contact the outer surface of the tank (3) through said opening (3.5.2), as depicted in Figure 2. In this illustrated embodiment, it is shown that the cover (3.5.1) comprises different openings: a respective opening for the passage of each of the two conduits for removing fluids from the collection portion, and at least one opening for introducing the aqueous matrix to be treated and/or the mixture of the aqueous matrix premixed with the magnetic material particles. Furthermore, it is shown that the cover (3.5.1) also comprises connections for two sprinklers (21, 22). The cover (3.5.1) is fixed to one end of the outer receptacle (3.5), for example, by means of screws. The outer receptacle (3.5) is fixedly attached to a support plate° (17), for example, by means of screws.

Figures 1 and 2 also show two vessels (23), one adapted for containing water, preferably acid water, and the other one adapted for containing distilled water.

As shown in Figures 3 to 5, in one embodiment, the body (3.1) of the tank (3) has a cylindrical configuration extending along a longitudinal direction (X-X'). The body (3.1) extends without a solution of continuity, forming the collection portion (3.2). The collection portion (3.2) comprises a longitudinal section (see Figure 4) tapering in the direction going from the mouth to the lower end (3.4) of the collection portion (3.2), wherein one of the sides of the longitudinal section is inclined with an inclination (α) with respect to the perpendicular direction (Y-Y') relative to the longitudinal direction (X-X') comprised between 1° and 60°, and more preferably between 10° and 25°. The closed end (3.4) of the collection portion (3.2) is arranged shifted with respect to the central longitudinal axis of the tank. In this illustrated embodiment, the closed end (3.4) of the collection portion (3.2) is arranged very close to the wall of the tank (3).

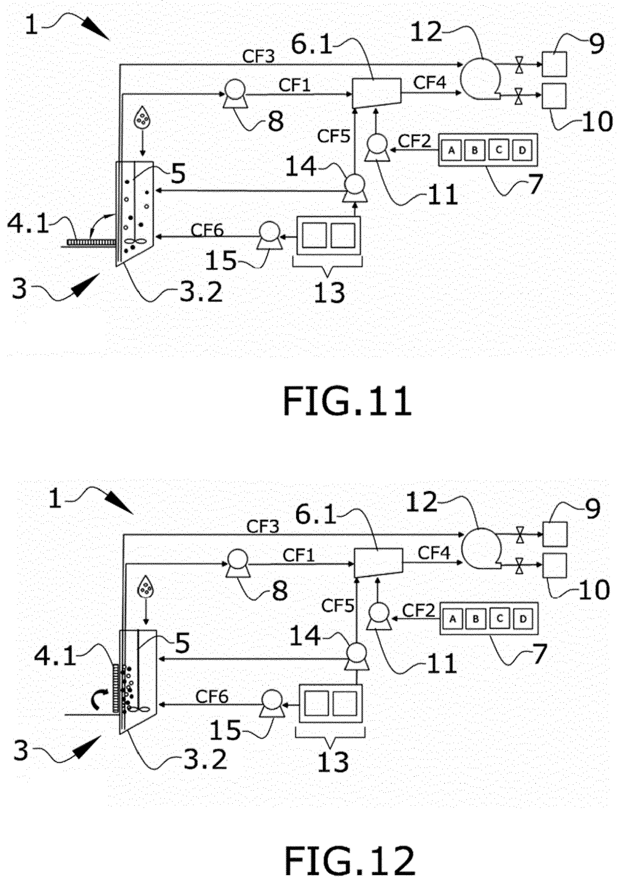

In one embodiment (shown in the attached Figures 11 to 13), the magnetic separation module (2) further comprises automatic stirring means (5) arranged inside the tank (3), in this case mechanical stirring means, and wherein the automatic stirring means are adapted for receiving from a control unit at least one signal corresponding to a stirring parameter.

In one embodiment (not shown in the attached figures), the magnetic separation module (2) further comprises means for detecting the level of the tank (3) adapted for sending at least one signal to a control unit upon detecting at least one predetermined level of fluid inside the tank.

In one embodiment, the magnetic separation module (2) further comprises one or a plurality of sprinklers adapted for ejecting into the tank a specific amount of pressurized liquid, preferably pressurized water, and wherein the one or the plurality of sprinklers are adapted for receiving from a control unit at least one signal to start ejecting pressurized liquid.

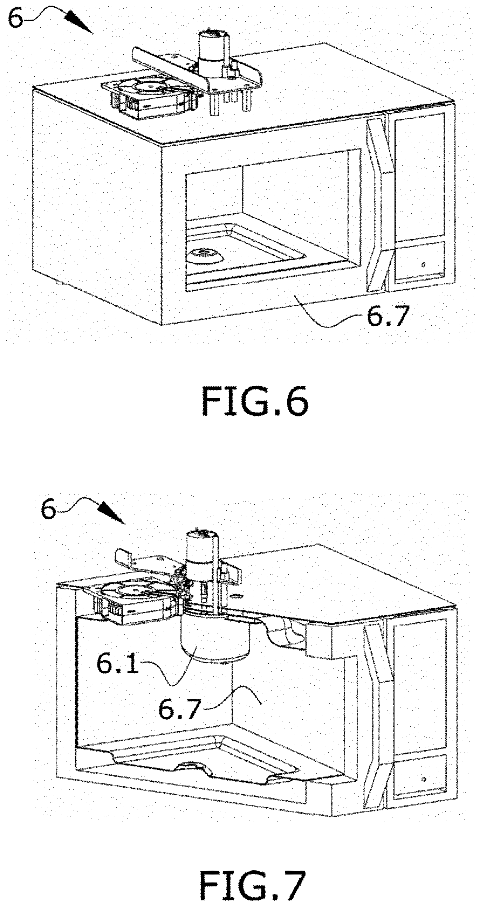

Figures 6 and 7 show a depiction of a microwave reactor module (6) according to an embodiment of the invention, wherein the microwave reactor module (6) is part of a system (1) for the determination of parameters for the quantification of microplastics in an aqueous matrix comprising microplastics, non-plastic organic particles and, optionally, inorganic particles. The system (1) comprises a magnetic separation module (2) according to any of the described embodiments, and furthermore a microwave reactor module (6) to selectively oxidize the non-plastic organic particles which are in the form of aggregates with the magnetic material particles of an aqueous suspension of aggregates (AG). The tank (3) of the magnetic separation module (2) is fluidically connected to the reactor vessel (6.1) by means of a first fluidic connection (CF1), wherein the first fluidic connection (CF1) is configured to allow the entry of an aqueous suspension of aggregates (AG) into the reactor vessel (6.1). The system (1) further comprises propulsion means (8) interposed in the first fluidic connection (CF1) adapted for propelling the aqueous suspension of aggregates (AG) from the tank (3) of the magnetic separation module (2) to the reactor vessel (6.1); and a control unit connected to the propulsion means of the first fluidic connection and to the automatic actuation means of the magnetic field generating element.

The microwave reactor module (6) comprises a microwave (6.7), and a reactor vessel (6.1) arranged in an inner part of the microwave (6.7), said reactor vessel (6.1) being configured to comprise, in the operating mode, a specific volume of an aqueous suspension of aggregates (AG) during selective oxidation.

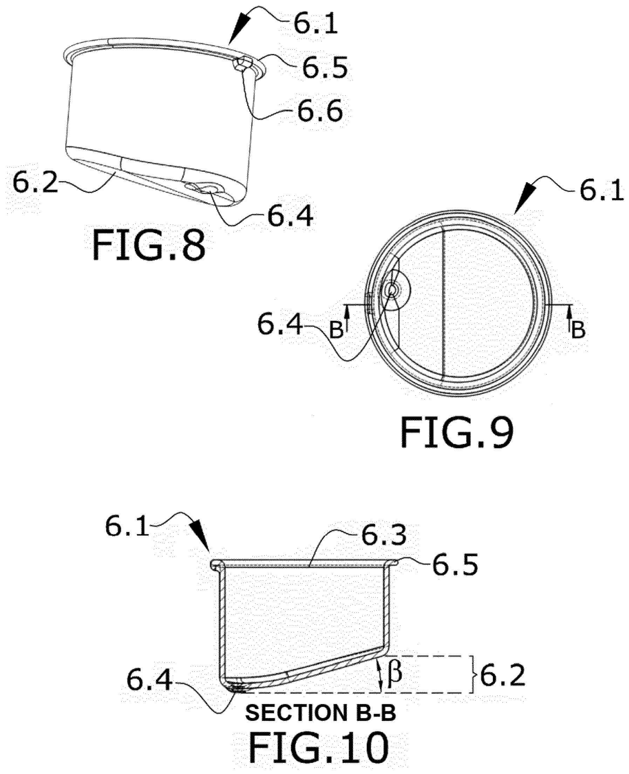

As shown in Figures 8 to 10, in one embodiment, the reactor vessel (6.1) of the microwave reactor module comprises a body, in this case having a cylindrical configuration extending along a longitudinal direction (X-X'), with a mouth (6.3) at one end, with said mouth (6.3) being adapted for the entry of the specific volume of an aqueous suspension of aggregates. The body extends without a solution of continuity forming a collection portion (6.2) arranged in a part opposite the mouth, wherein the collection portion (6.2) comprises a closed end (6.4), wherein the collection portion (6.2) is adapted, in the operating mode, for collecting in this collection portion (6.2) the particles that have not been oxidized after the selective oxidation phase inside the reactor vessel, i.e., collecting the non-oxidized non-plastic organic particles, the magnetic material particles, and the microplastics.

The collection portion (6.2) comprises a longitudinal section (see Figure 10) tapering in the direction going from the mouth to the lower end (6.4) of the collection portion (6.2), wherein one of the sides of the longitudinal section is inclined with an inclination (β) with respect to the perpendicular direction (Y-Y') relative to the longitudinal direction (X-X') comprised between 1° and 85°, preferably between 1° and 60°, and more preferably between 10° and 25°. The closed end (6.4) of the collection portion (6.2) is arranged shifted with respect to the central longitudinal axis of the tank. In this illustrated embodiment, the closed end (6.4) of the collection portion (6.2) is arranged very close to the wall of the reactor vessel (6.1). In this illustrated embodiment, the reactor vessel (6.1) comprises a flange (6.5) in the area of the mouth (6.3) and two or more protrusions (6.6) arranged in a position close to the flange (6.5). Said flange (6.5) advantageously serves so that the reactor vessel (6.1) can be supported on a surface of the microwave (6.7).

Said two or more protrusions advantageously serve for being able to fix the position of the reactor vessel (6.1) on the surface of the microwave (6.7). These securing means formed by the flange (6.5) and the two or more protrusions further allow being able to easily remove the reactor vessel (6.1) from the system, for example, for maintenance or cleaning tasks.

The control unit (not illustrated in the attached figures) of the system (1) is adapted for receiving at least the values of the predetermined actuation time of the magnetic field generating element in the tank (3) and of the predetermined selective oxidation time in the reactor vessel (6.1) and, based on said values, commanding:
- the actuation of the automatic actuation means of the magnetic field generating element (4.1) so that:
   - the magnetic field generating element (4.1) switches to the work mode; and
   - the magnetic field generating element (4.1) switches to the standby mode, when the predetermined actuation time of the magnetic field generating element has elapsed;
- the actuation of the propulsion means (8) of the first fluidic connection (CF1) to:
   - start propelling the fluid in the first fluidic connection (CF1); and
   - stop propelling the fluid in the first fluidic connection (CF1), when the reactor vessel (6.1) is filled with a predetermined volume of fluid.

Preferably, the control unit is adapted for commanding the actuation of the propulsion means (8) of the first fluidic connection (CF1) to stop propelling the fluid in the first fluidic connection (CF1) once a predetermined time from the start of the propulsion of the fluid in the first fluidic connection (CF1) has elapsed. This predetermined time is pre-set and calculated so that, based on the rate of fluid flow of the propulsion means (8) of the first fluidic connection (CF1), the reactor vessel (6.1) is filled with the desired predetermined volume of fluid. In another alternative or additional embodiment, the reactor vessel (6.1) comprises a level sensor and the control unit is adapted for commanding the actuation of the propulsion means (8) of the first fluidic connection (CF1) to stop propelling the fluid in the first fluidic connection (CF1) when it receives a control signal from the level sensor of the reactor vessel (6.1).

Figures 11 to 13 show respective diagrams of the fluidic connections of the different elements of the system (1) according to an embodiment of the second inventive aspect of the invention at different times of the operating process of the system (1).

In particular, the embodiment of the system (1) illustrated in Figures 11 to 13 also comprises, in addition to the magnetic separation module (2) and the microwave reactor module (6) fluidically connected to one another by means of a first fluidic connection (CF1), in which propulsion means (8) are interposed, a plurality of reservoirs (7) adapted for comprising a volume of a plurality of reagents and at least two reservoirs (13) adapted for comprising a volume of water and/or distilled water. The plurality of reservoirs (7) for reagents are adapted for comprising a volume of a plurality of reagents and are fluidically connected to the reactor vessel (6.1) by means of a second fluidic connection (CF2) in which propulsion means (11) are interposed, wherein the second fluidic connection (CF2) is configured to allow the entry of a predetermined amount of one or more reagents into the reactor vessel (6.1). The at least two reservoirs (13) for water, preferably acid water, and/or distilled water are fluidically connected to the reactor vessel (6.1) by means of at least one fifth fluidic connection (CF5) in which propulsion means (14) are interposed, wherein the fifth fluidic connection (CF5) is configured to allow the entry of a predetermined amount of water and/or distilled water from the at least two reservoirs (13) for water and/or distilled water into the reactor vessel (6.1); and furthermore at least two reservoirs (13) for water and/or distilled water are fluidically connected to the tank (3) by means of at least one sixth fluidic connection (CF6) in which propulsion means (15) are interposed, wherein the sixth fluidic connection (CF6) is configured to allow the entry of a predetermined amount of water and/or distilled water from the at least two reservoirs (13) into the tank (3).

Furthermore, in one embodiment, as shown in the embodiment of Figures 11 to 13, the system (1) also comprises first automatic filtration means and second automatic filtration means, as well as a vacuum pump (12) to favor filtering.

The first automatic filtration means comprise first support means (9) (schematically illustrated by means of a square) for at least one first filter (not shown in the figures) and a third fluidic communication (CF3) connecting the first support means (9) for at least one first filter with the inside of the collection portion of the tank, wherein the third fluidic connection (CF3) is configured to allow the exit of the particles that have not formed an aggregate with the magnetic material from inside the collection portion of the tank towards the at least one first filter. The first automatic filtration means (9) are adapted for filtering all the particles that have not formed an aggregate with the magnetic material which are present inside the tank (3) of the magnetic separation module (2).

The second automatic filtration means comprise second support means (10) (schematically illustrated by means of a square) for at least one second filter and a fourth fluidic communication (CF4) connecting the second support means (10) for at least one second filter (not shown in the figures) with the inside of the collection portion of the reactor vessel (6.1), wherein the fourth fluidic communication (CF4) is configured to allow the exit of the aggregates that have been oxidized from inside the collection portion of the reactor vessel (6.1) towards the at least one second filter. The second automatic filtration means (10) are adapted for filtering the aggregates that have been oxidized inside the vessel (6.1) of the microwave reactor module (6).

As shown in the embodiment of Figures 11 to 13, the vacuum pump (12) is connected in this case both to the third fluidic communication (CF3) and to the fourth fluidic communication (CF4); the vacuum pump (12) is adapted to generate a vacuum inside the third or the fourth fluidic communication (CF3, CF4), based on the orders received from the control unit. Particularly, the control unit is connected to the vacuum pump (12) for commanding its operation when the predetermined actuation time of the magnetic field generating element in the tank (3) has elapsed; and for commanding the operation of the vacuum pump (12) when the predetermined selective oxidation time in the reactor vessel (6.1) has elapsed. In other non-illustrated embodiments, an independent vacuum pump (12) can be provided for each of the two fluidic communications (CF3, CF4).

In the case of the system (1) being provided with first automatic filtration means and second automatic filtration means and a vacuum pump (12), the control unit is further adapted for commanding the actuation of the propulsion means (8) of the first fluidic connection (CF1) to start propelling the fluid of the first fluidic connection (CF1) from the tank (3) to the reactor vessel (6.4) when the filtration of water and the rest of the non-aggregated particles through the third fluidic connection (CF3) has finished.

Additionally, the system (1) comprises a respective safety valve (18) arranged between the vacuum pump (12) and each support means (9, 10) for at least a first filter or a second filter for the opening or closing of liquids towards the automatic filtration means.

Figure 11 shows the moment of operation of the system (1) when the magnetic field generating element (4.1) in the form of magnet is in the standby mode (i.e., located at a distance from the side wall of the tank (3)) and the tank (3) comprises the mixture inside it, in which the mixture comprises aggregates (which are illustrated in the form of black circles) and free magnetic material particles (which are illustrated in the form of white circles). Said Figures 11 to 13 also illustrate automatic stirring means (5) in the form of a mechanical element which helps in the formation of aggregates.

Figure 12 shows the moment of operation of the system (1) when the magnetic field generating element (4.1) is in the work mode (i.e., located touching or close to the side wall of the tank (3)). This Figure 12 shows how the aggregates and the free magnetic material particles have been located close to the side wall of the tank (3) in which the magnet is arranged on the outer part of the tank (3).

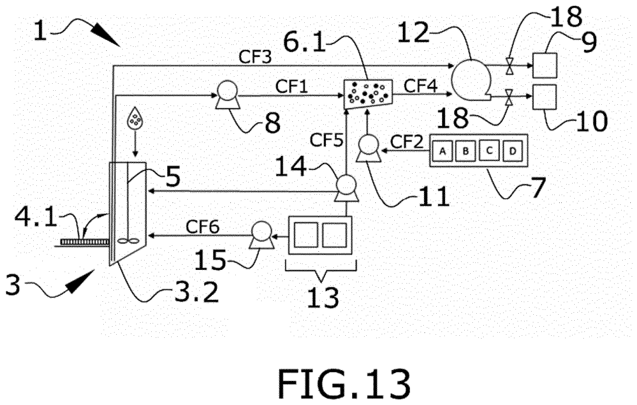

Figure 13 shows the moment of operation of the system (1) when the magnetic field generating element (4.1) has again switched to the standby mode after the predetermined actuation time of the magnetic field generating element has elapsed, and the formed aggregates and the free magnetic material particles of the mixture that have been retained by the magnetic separation means have been taken to the collection portion of the tank (3) and an amount of acid water has been added to form an aqueous suspension of aggregates (AG). Then, the control unit has commanded the operation of the propulsion means (8) of the first fluidic connection (CF1) to start propelling the fluid (i.e., the aqueous suspension of aggregates (AG)) in the first fluidic connection (CF1), until a specific volume of the aqueous suspension of aggregates (AG) has been filled inside the reactor vessel (6.1). Once the reactor vessel (6.1) has been filled, the selective oxidation of the non-plastic organic particles which are in the form of aggregates with the magnetic material particles in the aqueous suspension of aggregates (AG) is carried out.

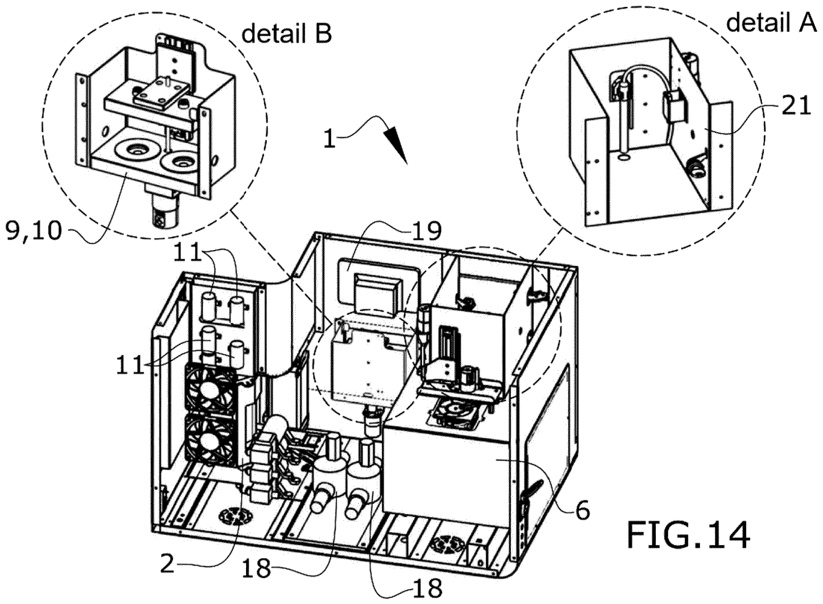

Figure 14 shows a schematic view of the system (1) according to an embodiment of the second inventive aspect of the invention in which the rear wall of the outer casing of the system has been removed to have visual access to the inner part of the system (1).

This Figure 14 shows a detail "A" of an embodiment of the means (21) for measuring the pH, comprising a pH-meter, a worm screw and a nut which shifts along the worm screw due to the operation of an electric motor, and in which the pH-meter is fixed integrally to the nut. The pH-meter thereby moves integrally together with the nut between the two limit positions. Additionally, the means for linearly shifting the pH-meter may comprise a limit switch sensor in each of the two limit positions, with both limit switch sensors being connected to a control unit, in which the control unit of the system is configured to automatically command the operation of the motor to rotate the worm screw and accordingly shift the nut in one direction of the worm screw or the other. In this illustrated embodiment, the means (21) for measuring the pH are configured to shift the pH-meter between two limit positions: a first limit position corresponding to when the pH-meter is located in contact with the solution comprised inside the tank in the work mode, and a second limit position corresponding to when the pH-meter is outside of the solution comprised inside the tank. Said Figure 14 shows in the upper part of the image a detail "A" of the means (21) for measuring the pH seen from the front part of the system, i.e., the part opposite that of this Figure 14. This detail shows the motor of the means (21) for measuring the pH, the worm screw and the support nut of the pH-meter.

The left side of Figure 14 also shows a detail "B" of the first and second automatic filtration means (9, 10) which form a single assembly, and in which the first and second automatic filtration means (9, 10) are arranged one next to the other. The first automatic filtration means are adapted for filtering all the particles that have not formed an aggregate with the magnetic material which are present inside the tank (3) of the magnetic separation module (2); whereas the second automatic filtration means are adapted for filtering the aggregates that have been oxidized inside the vessel (6.1) of the microwave reactor module (6).

The first filtration means comprise first support means (9) for at least one first filter, in which the at least one first filter is suitable for withstanding high muffle furnace temperatures; and the second filtration means comprise second support means (10) for at least one second filter, in which the at least one second filter is suitable for withstanding high muffle furnace temperatures. Both first and second support means (9, 10), as well as a first and second filters (not shown) which would be arranged above each respective first and second support means (9, 10) are depicted in this Figure 14 arranged spaced apart from one another. In this embodiment, the first and second support means (9, 10) comprise two independent blocks, in which one of these blocks is movable with respect to the other block so as to acquire two positions, a first position in which the two blocks are spaced apart throughout the standby position, and a second position in which the two blocks are attached to one another throughout the filtering operation position. In this embodiment, the first and second support means (9, 10) comprise respective contact elements, preferably annular-shape contact elements, arranged on the surface of each block. In the working position, one or more filters are arranged on one of the contact elements, such that in the working position (i.e., during the filtering operation) both contact elements are in contact with the one or more filters. The shifting means for shifting one of the blocks with respect to the other comprise a worm screw with a nut or carriage that is movable along the worm screw and a drive motor of the worm screw.

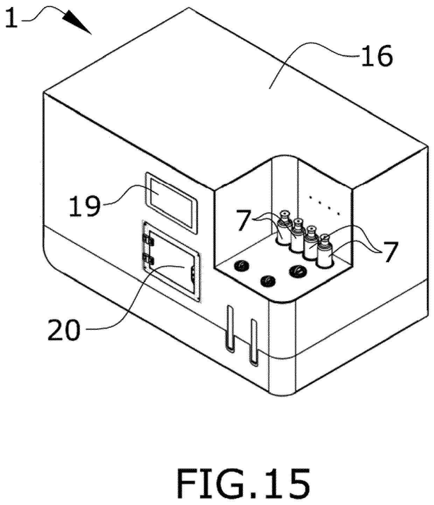

Figure 15 shows a schematic view of the system (1) according to an embodiment of the second inventive aspect of the invention seen from the outer part, and which comprises a casing (16) adapted for enclosing at least the magnetic separation module (2) and the microwave reactor module (6). In this embodiment, the casing (16) has a considerably prismatic configuration with a rectangular base. In a specific embodiment, as shown in the embodiment of Figure 15, the casing (16) further comprises, in an outer part, a touch screen (19), adapted to visualize one piece of datum or a plurality of data from the control unit and/or for entering input data in the control unit. In this specific embodiment, the casing (16) further comprises a receptacle (20), accessible to the user, adapted for housing at least one first filter and one second filter. This receptacle (20) can be closed by means of providing a window through which the user can access the receptacle (20) to change the at least one first filter and one second filter when needed. This Figure 15 also shows, in this case, a recessed part at the base of which four reservoirs (7) adapted for comprising a volume of a reagent are arranged.

In one embodiment, the system (1) further comprise means for measuring the pH of the aqueous suspension of aggregates (AG) comprised, in the operating mode, inside the reactor vessel (6.1); and means for the automatic metering of one or more reagents from the plurality of reservoirs (7). The control unit is furthermore connected to the means for measuring the pH of the aqueous suspension of aggregates (AG) and to the means for the automatic metering of one or more reagents, such that the control unit is adapted for receiving the pH measurement from the means for measuring the pH and commanding, based on said value of the pH measurement, the metering of a specific amount of a reagent from the plurality of reservoirs (7).

## Claims

1. A magnetic separation module (2) for separating microplastics from an aqueous matrix to be treated, wherein the aqueous matrix to be treated comprises microplastics, non-plastic organic particles and, optionally, inorganic particles, wherein the magnetic separation module (2) is adapted for using a mixture consisting of a specific volume of the aqueous matrix to be treated and of a specific amount of magnetic material particles, said magnetic separation module (2) comprising:
- a tank (3) which, in the operating mode, comprises the mixture, wherein the tank (3) comprises a body (3.1) with a mouth (3.3) at one end, with said mouth (3.3) being adapted for the entry of a specific volume of the aqueous matrix to be treated premixed with the magnetic material particles, or of the two parts of the mixture separately, wherein the body (3.1) ends in a collection portion (3.2) arranged in a part opposite the mouth (3.3), wherein the collection portion (3.2) comprises a closed end (3.4), wherein the collection portion (3.2) is adapted, in the operating mode, for collecting in this collection portion (3.2):
- the residual aqueous fraction of the mixture together with the magnetic material particles that have not been retained by magnetic separation means, and
- the formed aggregates and the free magnetic material particles of the mixture that have been retained by magnetic separation means; and
- magnetic separation means (4), comprising:
- at least one magnetic field generating element (4.1),
- automatic actuation means (4.2) for actuating the at least one magnetic field generating element (4.1), which can be controlled by a control unit so that:
i. in the work mode, the at least one magnetic field generating element (4.1) generates a magnetic field inside the tank (3) to retain the formed aggregates and the free magnetic material particles of the mixture inside the tank (3); and
ii. in the standby mode, the at least one magnetic field generating element (4.1) does not generate a magnetic field or does not generate a magnetic field that is sufficient to retain the formed aggregates and the free magnetic material particles of the mixture.

2. The magnetic separation module (2) according to claim 1, wherein the magnetic separation means (4) are configured so that, in the work mode, the at least one magnetic field generating element (4.1) is substantially in contact with a part of the outer surface of the tank (3).

3. The magnetic separation module (2) according to claim 1 or 2, wherein the at least one magnetic field generating element (4.1) is a permanent magnet, preferably a ferrite, more preferably an alnico, even more preferably a samarium-cobalt, and even more preferably a neodymium permanent magnet, wherein the magnetic separation module (2) comprises:
- magnet shifting means configured to adopt at least two different specific positions and connected to the automatic actuation means in order to:
i. in the work mode, move the shifting means closer to the tank (3) to a first working position in which the magnet is substantially in contact with the tank (3); and
ii. in the standby mode, move the shifting means away from the tank (3) to a second standby position in which the magnet is not substantially in contact with the tank (3).

4. The magnetic separation module (2) according to claim 1 or 2, wherein the at least one magnetic field generating element (4.1) is an electromagnet or a switchable magnet which can be switched on/off, and wherein the automatic actuation means comprise switching means connected to the electromagnet or to the switchable magnet and adapted for:
i. in the work mode, activating the electromagnet or the switchable magnet to generate a predetermined magnetic field, and
ii. in the standby mode, deactivating the electromagnet or the switchable magnet so as not to generate a magnetic field.

5. The magnetic separation module (2) according to any of the preceding claims, wherein
the body (3.1) of the tank (3) has a substantially cylindrical configuration, extending along a longitudinal direction (X-X'), and
the collection portion (3.2) of the tank (3) comprises a longitudinal section tapering in the direction going from the mouth (3.3) to the lower end (3.4) of the collection portion (3.2), wherein at least one of the sides of the longitudinal section is inclined with an inclination (α) with respect to the perpendicular direction (Y-Y') relative to the longitudinal direction (X-X') comprised between 1° and 85°, preferably between 1° and 60°, and more preferably between 10° and 25°.

6. The magnetic separation module (2) according to any of the preceding claims, wherein the closed end (3.4) of the collection portion is arranged shifted with respect to the central longitudinal axis of the tank (3).

7. The magnetic separation module (2) according to any of the preceding claims, wherein the tank (3) is made of glass.

8. The magnetic separation module (2) according to any of the preceding claims, further comprising one or a plurality of sprinklers adapted for ejecting into the tank a specific amount of pressurized liquid, preferably pressurized water, and wherein the one or the plurality of sprinklers are adapted for receiving from a control unit at least one signal to start ejecting pressurized liquid.

9. A system (1) for the determination of parameters for the quantification of microplastics in an aqueous matrix comprising microplastics, non-plastic organic particles and, optionally, inorganic particles, wherein the system (1) comprises:
- a magnetic separation module (2) according to any of the preceding claims;
- a microwave reactor module (6) to selectively oxidize the non-plastic organic particles which are or are not in the form of aggregates with the magnetic material particles of an aqueous suspension of aggregates (AG), wherein the microwave reactor module (6) comprises:
- a microwave (6.7), and
- a reactor vessel (6.1) arranged in an inner part of the microwave (6.7), said reactor vessel (6.1) being configured to comprise, in the operating mode, a specific volume of an aqueous suspension of aggregates (AG) during selective oxidation,
wherein the tank (3) of the magnetic separation module (2) is fluidically connected to the reactor vessel (6.1) by means of a first fluidic connection (CF1), wherein the first fluidic connection (CF1) is configured to allow the entry of an aqueous suspension of aggregates (AG) into the reactor vessel (6.1);
- propulsion means (8) interposed in the first fluidic connection (CF1) adapted for propelling the aqueous suspension of aggregates (AG) from the tank (3) of the magnetic separation module (2) to the reactor vessel (6.1); and
- a control unit connected to the propulsion means (8) of the first fluidic connection and to the automatic actuation means of the magnetic field generating element, wherein the control unit is adapted for receiving at least the values of the predetermined actuation time of the magnetic field generating element in the tank (3) and of the predetermined selective oxidation time in the reactor vessel (6.1), and based on said values, commanding:
- the actuation of the automatic actuation means of the magnetic field generating element (4.1) so that:
- the magnetic field generating element (4.1) switches to the work mode; and
- the magnetic field generating element (4.1) switches to the standby mode, when the predetermined actuation time of the magnetic field generating element has elapsed;
- the actuation of the propulsion means (8) of the first fluidic connection (CF1) to:
- start propelling the fluid in the first fluidic connection (CF1); and
- stop propelling the fluid in the first fluidic connection (CF1) when the reactor vessel (6.1) is filled with a predetermined volume of fluid.

10. The system (1) according to claim 9, wherein the reactor vessel (6.1) of the microwave reactor module comprises a body with a mouth (6.3) at one end, with said mouth (6.3) being adapted for the entry of the specific volume of an aqueous suspension of aggregates, wherein the body ends in a collection portion (6.2) arranged in a part opposite the mouth, wherein the collection portion (6.2) comprises a closed end (6.4), and wherein the collection portion (6.2) is adapted, in the operating mode, for collecting in this collection portion (6.2): the non-oxidized non-plastic organic particles, the magnetic material particles, and the microplastics, after the selective oxidation phase inside the reactor vessel (6.1).

11. The system (1) according to claim 10, wherein:
the body of the reactor vessel (6.1) has a substantially cylindrical configuration, extending along a longitudinal direction (X-X'); and
the collection portion (6.2) of the reactor vessel (6.1) comprises a longitudinal section tapering in the direction going from the mouth (6.3) to the lower end of the collection portion (6.2), wherein at least one of the sides of the longitudinal section is inclined with an inclination with respect to the perpendicular direction relative to the longitudinal direction comprised between 1° and 85°, preferably between 1° and 60°, and more preferably between 10° and 25°, and wherein preferably the closed end (6.4) of the collection portion (6.2) is arranged shifted with respect to the central longitudinal axis of the reactor vessel (6.1).

12. The system (1) according to any of claims 9 to 11, further comprising:
- a plurality of reservoirs (7) adapted for comprising a volume of a plurality of reagents, wherein the reservoirs (7) are fluidically connected to the reactor vessel (6.1) by means of at least one second fluidic connection (CF2), wherein the second fluidic connection (CF2) is configured to allow the entry of a predetermined amount of one or more reagents into the reactor vessel (6.1);
- means for measuring the pH of the aqueous suspension of aggregates (AG) comprised, in the operating mode, inside the reactor vessel; and
- means for the automatic metering of one or more reagents from the plurality of reservoirs (7),
wherein the control unit is furthermore connected to the means for measuring the pH of the aqueous suspension of aggregates (AG) and to the means for the automatic metering of one or more reagents, and
wherein the control unit is adapted for receiving the pH measurement from the means for measuring the pH and commanding, based on said value of the pH measurement, the metering of a specific amount of a reagent from the plurality of reservoirs (7).

13. The system (1) according to claim 12, wherein the means for measuring the pH of the aqueous suspension of aggregates comprise:
- a pH-meter, and
- means for automatically shifting the pH-meter between a first limit position corresponding to when the pH-meter is at a specific level or below said level of the reactor vessel (6.1), and a second limit position corresponding to when the pH-meter is outside of this specific level of the reactor vessel (6.1);
wherein the control unit is adapted for commanding the operation of the means for automatically shifting the pH-meter between the first and the second limit positions and vice versa.

14. The system (1) according to any of claims 9 to 13, further comprising:
- first automatic filtration means, adapted for filtering all the particles that have not formed an aggregate with the magnetic material which are present inside the tank (3) of the magnetic separation module (2), wherein the first filtration means comprise first support means (9) for at least one first filter and a third fluidic communication (CF3) connecting the first support means (9) for at least one first filter with the inside of the collection portion of the tank, wherein the third fluidic connection (CF3) is configured to allow the exit of the particles that have not formed an aggregate with the magnetic material from inside the collection portion of the tank towards the at least one first filter;
- second automatic filtration means, adapted for filtering the aggregates that have been oxidized inside the vessel (6.1) of the microwave reactor module (6), wherein the second filtration means comprise second support means (10) for at least one second filter and a fourth fluidic communication (CF4) connecting the second support means (10) for at least one second filter with the inside of the collection portion of the reactor vessel (6.1), wherein the fourth fluidic communication (CF4) is configured to allow the exit of the aggregates that have been oxidized from inside the collection portion of the reactor vessel (6.1) towards the at least one second filter; and
wherein the control unit is further adapted for commanding the actuation of the propulsion means (8) of the first fluidic connection (CF1) to further start propelling the fluid of the first fluidic connection (CF1) from the tank (3) to the reactor vessel (6.4) when the filtration of water and the rest of the non-aggregated particles through the third fluidic connection (CF3) has finished.

15. The system (1) according to claim 14, further comprising at least one vacuum pump (12) connected to the third fluidic communication (CF3) and/or to the fourth fluidic communication (CF4), wherein the at least one vacuum pump (12) is adapted to generate a vacuum inside the third and/or fourth fluidic communications (CF3, CF4), wherein the control unit is connected to said at least one vacuum pump (12) for commanding:
- the operation of the at least one vacuum pump (12) when the predetermined actuation time of the magnetic field generating element in the tank (3) has elapsed, and/or
- the operation of the at least one vacuum pump (12) when the predetermined selective oxidation time in the reactor vessel (6.1) has elapsed.
